# EUROPEAN PATENT APPLICATION

(11) **EP 1 854 361 A1**
(43) Date of publication of application: **14.11.2007**
(21) Application number: 07107788.7
(22) Date of filing: 09.05.2007
(51) Int. Cl.: A23C 19/024, A23C 19/05, A01J 25/00, A01J 25/06, A01J 25/11

(54) **Method and device for making cheese**

(30) Priority: 11.05.2006 NL 1031795
(71) Applicant: Juurlink, Gerhardus Hermanus Maria, 7705 PD Drogteropslagen (NL)
(72) Inventor: Juurlink, Gerhardus Hermanus Maria, 7705 PD Drogteropslagen (NL)
(74) Representative: Bakker, Hendrik

(57) **Abstract**

The invention relates to a device for making cheese. The device comprises a first vat (1) of cylindrical form provided with an agitator/cutter (3) and a second vat (2) provided with a screen (8) for discharging whey, a drive (10) for causing the screen to move, and an agitator (6) placed close to the bottom of the second vat.

## Description

The invention relates to a method for making cheese, wherein a mixture of milk and a curdling agent is introduced into a first vat, whereafter the mixture is agitated and/or cut such that a mixture of curd and whey results.

In the prior art method the mixture of curd and whey is then allowed to rest so that the curd can settle and the whey can be pumped out. Washing water is subsequently supplied and the curd is once again cut and agitated, whereafter the mixture is once again allowed to rest and the mixture of whey and water is pumped out. The drawback hereof is that the first vat is in fact not being utilized for a longer period of time. The method according to the invention obviates this drawback and has the feature that the mixture of curd and whey is caused to flow into a second vat, whereafter whey is extracted from the mixture.

An advantageous realization of the inventive method has the feature that the whey is at least substantially extracted via at least one screen placed in the second vat, so that it is not necessary to wait until the curd has settled.

A further advantageous realization of the inventive method has the feature that the whey is extracted from the mixture while being agitated continuously. The curd hereby does not have the opportunity to settle, and it is not therefore necessary to cut the curd again. Small curd particles inevitably occur during this cutting which represent a loss because they are pumped away together with the whey.

A further favourable realization of the inventive method has the feature that water is introduced at least once into the second vat, whereafter the mixture of curd, whey and water is agitated, whereafter whey and water are again extracted via the at least one screen.

A further favourable realization of the inventive method has the feature that the at least one screen is moved during the extraction of whey or of whey and water, this in effective manner preventing the screen from becoming clogged.

A further favourable realization of the inventive method has the feature that the curd is allowed to run into a drainage vessel or into one or more cheese moulds.

The invention also relates to a device for making cheese, comprising a first vat provided with an agitator/cutter for agitating and/or cutting a curd/whey mixture. According to the prior art the first vat does in fact have two functions, since the curd is also allowed to settle therein and the whey is subsequently pumped out. The drawback is that the first vat, including the agitator/cutter, here remains unused for a relatively long period of time. The device according to the invention obviates this drawback and has the feature that the device also comprises a second vat provided with whey discharge means. The addition of a relatively inexpensive second vat thus makes it possible to practically double production.

According to a further aspect of the invention, a favourable embodiment has the feature that the whey discharge means comprise at least one screen of cylindrical form. Because an agitator/cutter is absent in the second vat, the cylindrical screen can be readily lowered into the curd/whey mixture.

A further favourable embodiment of the inventive device has the feature that the whey discharge means also comprise an agitator placed close to a bottom of the second vat. Due to the agitator being placed close to the bottom the cylindrical screen can be lowered unimpeded into the curd/whey mixture, while the agitator can set the curd/whey mixture into motion sufficiently to separate the whey from the curd.

A further favourable embodiment of the inventive device has the feature that the device is provided with drive means for causing the screen to move in the second vat. The screen is hereby prevented in effective manner from becoming clogged.

A favourable alternative embodiment has the feature that the screen is mounted on the agitator, whereby separate drive means for moving the screen are no longer necessary.

A further favourable embodiment has the feature that a baffle is arranged in the screen, thereby generating a flow directed toward the screen which keeps the screen clean.

A further favourable embodiment has the feature that the device comprises pump means for pumping whey or a whey/water mixture out of the screen. The pump means preferably pump out the whey or the water/whey mixture close to a bottom of the screen.

The invention will now be further elucidated with reference to the following figures, wherein:
- Fig. 1: shows a cross-section of a possible embodiment of a first vat and a second vat according to the invention;
- Fig. 2A: shows a top view of a part of this embodiment;
- Fig. 2B: shows a top view of a part of an alternative embodiment;
- Fig. 3: shows a cross-section of a further alternative embodiment of a first vat and a second vat;
- Fig. 4: shows a top view of a part of this embodiment;
- Fig. 5: shows a cross-section of a further alternative embodiment of a first vat and a second vat;
- Fig. 6: shows a top view of a part of this embodiment.

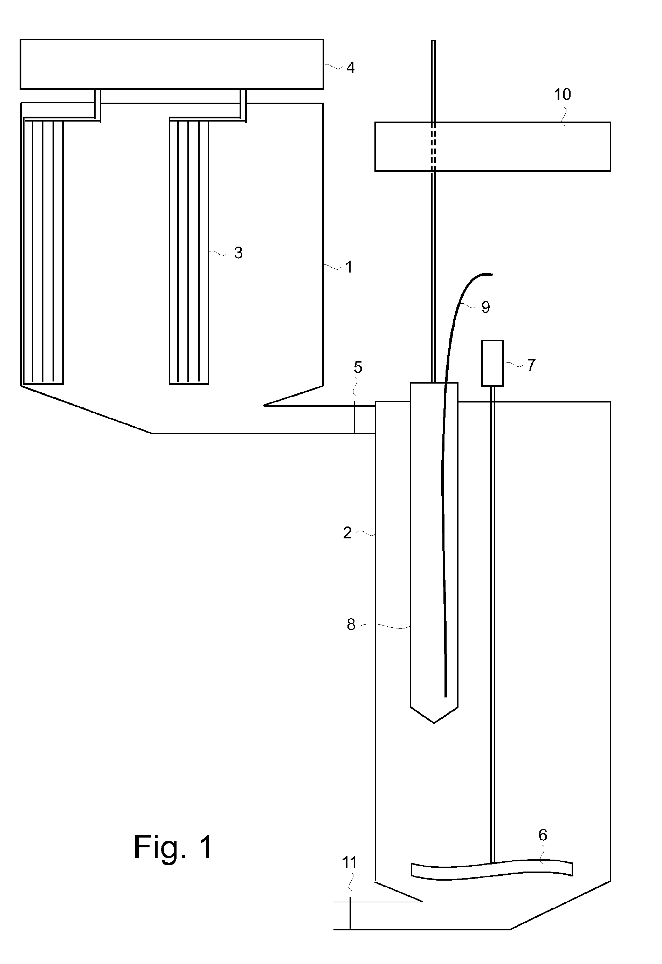

Fig. 1 shows a cross-section of a possible embodiment of a first vat 1 and a second vat 2 according to the invention. For the preparation of cheese first vat 1 is filled with a mixture of milk and a curdling agent, whereafter the contents are agitated briefly using an agitator/cutter 3 driven using a first drive 4. The mixture is then allowed to rest until the curdling is sufficient, whereafter the mixture is once again agitated and cut for some considerable time using agitator/cutter 3. Thus obtained is a mixture of curd and whey which, after opening a valve 5, flows into second vat 2. First vat 1 can then be filled once again with a mixture of milk and a curdling agent. In second vat 2 the mixture of curd and whey is agitated continuously with an agitator 6 driven using a second drive 7, while a cylindrical screen 8 is lowered into the mixture of curd and whey, wherein the whey which flows into cylindrical screen 8 via the openings therein is removed using a hose 9 and a pump (not shown). While the whey is being pumped out the cylindrical screen 8 is moved reciprocally in a horizontal and/or vertical direction by a third drive 10 so that the openings cannot become clogged. Once almost all the whey has been pumped out, washing water is allowed to flow into cylindrical screen 8 and is mixed with the curd via the openings and using agitator 6. The openings in cylindrical screen 8 are simultaneously washed clean. The washing water, with a significant part of the whey that is still present, is then pumped out via hose 9. If desired, this washing operation can be repeated several times. Finally, a valve 11 is opened and the curd flows out into a drainage vessel (not shown) or directly into cheese moulds.

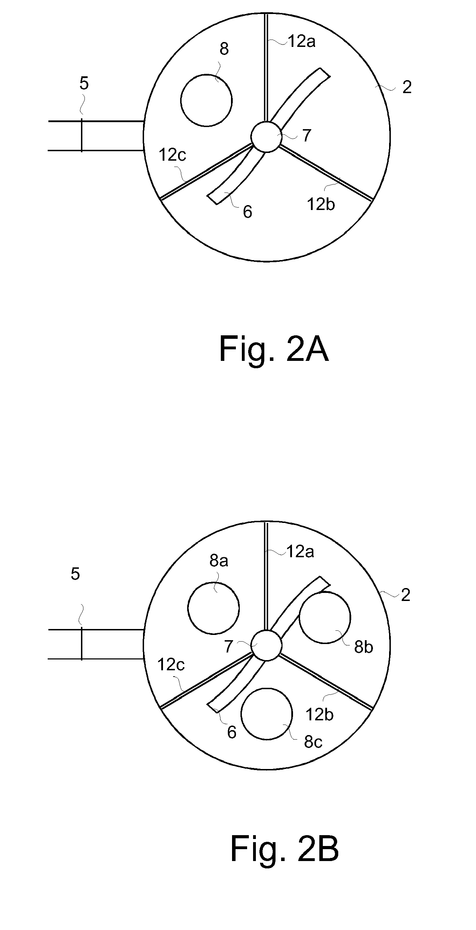

Fig. 2A shows a top view of a part of this embodiment, with valve 5, second vat 2, second drive 7 which is fixed to second vat 2 with three spokes 12a,12b,12c, in addition to agitator 6 and cylindrical screen 8.

Fig. 2B shows a top view of an alternative embodiment, with valve 5, second vat 2, second drive 7 which is fixed to second vat 2 with three spokes 12a,12b,12c, in addition to agitator 6 and three cylindrical screens 8a,8b,8c which can be lowered simultaneously using third drive 10, shown in Fig. 1, into the curd/whey mixture and moved reciprocally. It will be immediately apparent that the whey can be pumped out more rapidly in this manner.

First vat 1 and second vat 2 preferably take a double-walled form so that their contents can, if desired, be heated or, conversely, cooled by introducing water of a predetermined temperature between an inner wall and an outer wall.

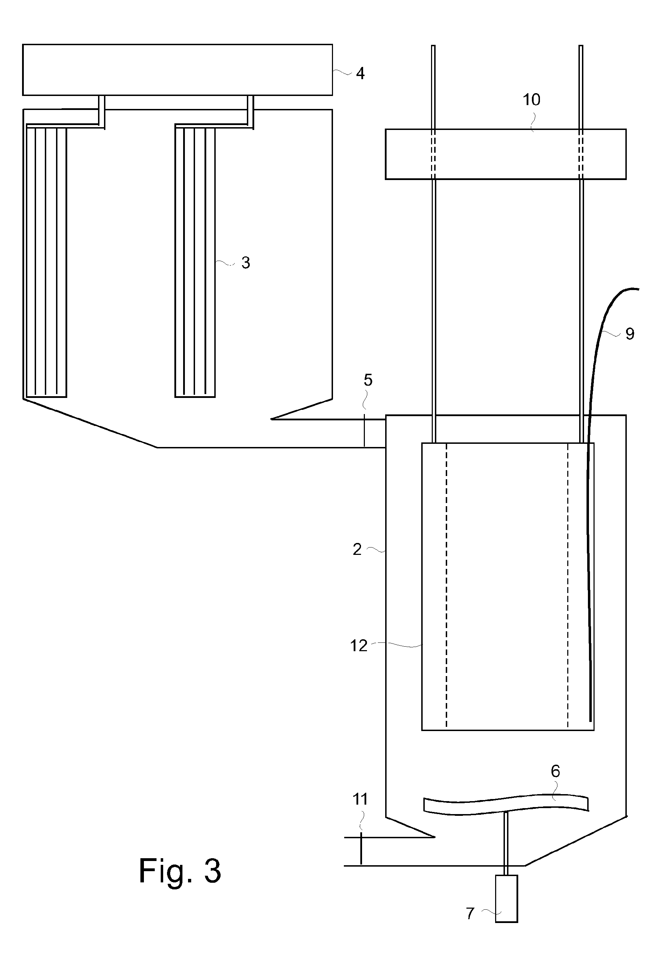

Fig. 3 shows a cross-section of a further alternative embodiment of a first vat 1 and a second vat 2 according to the invention. A mixture of curd and whey is herein prepared in first vat 1 wholly in accordance with the method described with reference to Fig. 1, and flows into second vat 2 after opening of valve 5. In second vat 2 the mixture of curd and whey is agitated continuously with an agitator 6 driven using a second drive 7, while a tubular screen 12 is lowered into the mixture of curd and whey, wherein the whey flowing into tubular screen 12 via the openings therein is removed using a hose 9, which is pushed between an outer wall and an inner wall of tubular screen 12, and a pump (not shown). While the whey is being pumped out, tubular screen 12 is moved reciprocally in a vertical direction and/or rotated by a third drive 10 so that the openings cannot become clogged. Once practically all the whey has been pumped out, washing water is then allowed to flow into tubular screen 12 and is mixed with the curd via the openings and using agitator 6. The openings in tubular screen 12 are simultaneously washed clean. The washing water, with a significant part of the whey that is still present, is then pumped out via hose 9. If desired, this washing operation can be repeated several times. Finally, a valve 11 is opened and the curd flows out into a drainage vessel (not shown) or directly into cheese moulds.

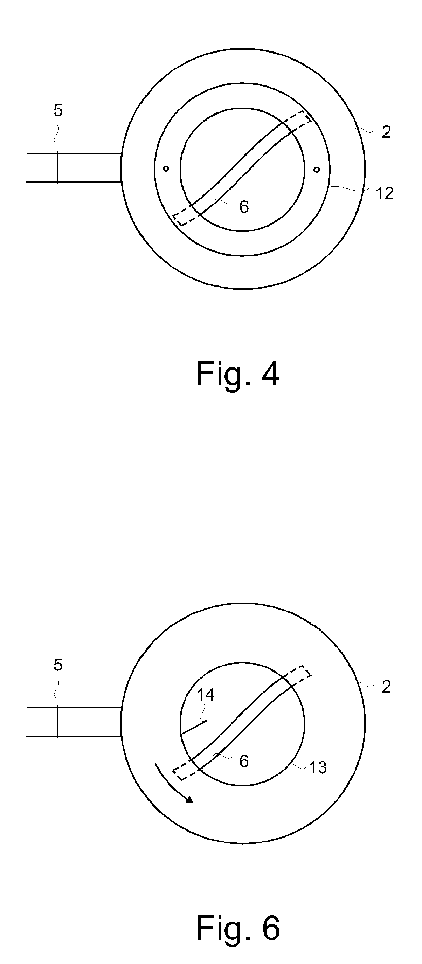

Fig. 4 shows a top view of a part of this embodiment, with valve 5, second vat 2, in addition to agitator 6 and tubular screen 12 which can be lowered simultaneously using third drive 10, shown in Fig. 1, into the curd/whey mixture. It will be immediately apparent that the whey can be pumped out particularly efficiently in this manner.

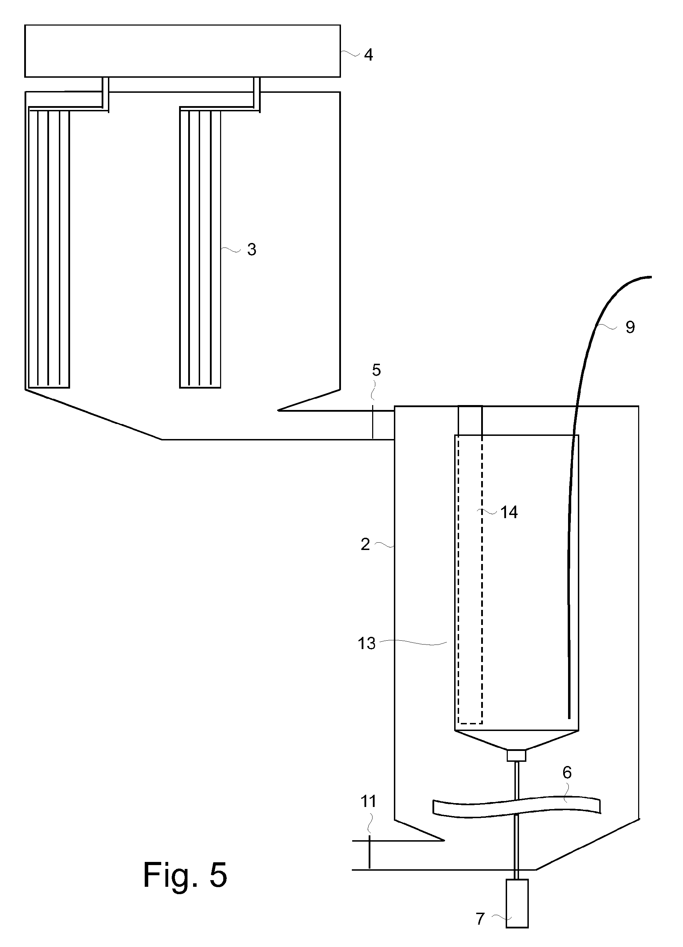

Fig. 5 shows a cross-section of a further alternative embodiment of a first vat 1 and a second vat 2 according to the invention. A mixture of curd and whey is herein prepared in first vat 1 wholly in accordance with the method described with reference to Fig. 1, and flows into second vat 2 after opening of valve 5. In second vat 2 the mixture of curd and whey is agitated continuously with an agitator 6 driven using a second drive 7, while a screen 13 mounted on agitator 6 rotates in the mixture. The whey herein flows into screen 13 via the openings therein and is removed using a hose 9 pushed into screen 13 and a pump (not shown). Placed in screen 13 is a baffle 14 which generates a flow in the direction of screen 13 so that the openings cannot become clogged. Once practically all the whey has been pumped out, washing water is then allowed to flow into screen 13 and is mixed with the curd via the openings and using agitator 6. The openings in screen 13 are simultaneously washed clean. The washing water, with a significant part of the whey that is still present, is then pumped out via hose 9. If desired, this washing operation can be repeated several times. Finally, a valve 11 is opened and the curd flows out into a drainage vessel (not shown) or directly into cheese moulds.

Fig. 6 shows a top view of this embodiment, with valve 5, second vat 2 in addition to agitator 6 and screen 13 in which the baffle 14 is placed almost thereagainst in slightly oblique position such that a flow is generated in the direction of screen 13 which keeps screen 13 clean.

## Claims

1. Method for making cheese, wherein a mixture of milk and a curdling agent is introduced into a first vat, whereafter the mixture is agitated and/or cut such that a mixture of curd and whey results, **characterized in that** the mixture of curd and whey is caused to flow into a second vat, whereafter whey is extracted from the mixture.

2. Method as claimed in claim 1, **characterized in that** the whey is at least substantially extracted via at least one screen placed in the second vat.

3. Method as claimed in claim 2, **characterized in that** the whey is extracted from the mixture while being agitated continuously.

4. Method as claimed in claim 2 or 3, **characterized in that** water is introduced at least once into the second vat, whereafter the mixture of curd, whey and water is agitated, whereafter whey and water are again extracted via the at least one screen.

5. Method as claimed in any of the claims 2-4, **characterized in that** the at least one screen is moved during the extraction of whey or of whey and water.

6. Method as claimed in any of the foregoing claims, **characterized in that** the curd is then allowed to run into a drainage vessel or into one or more cheese moulds.

7. Device for making cheese, comprising a first vat provided with an agitator/cutter for agitating and/or cutting a curd/whey mixture, **characterized in that** the device also comprises a second vat provided with whey discharge means.

8. Device as claimed in claim 7, **characterized in that** the whey discharge means comprise at least one screen of cylindrical form.

9. Device as claimed in claim 8, **characterized in that** the whey discharge means also comprise an agitator placed close to a bottom of the second vat.

10. Device as claimed in claim 9, **characterized in that** the device is provided with drive means for causing the screen to move in the second vat.

11. Device as claimed in claim 9, **characterized in that** the screen is mounted on the agitator.

12. Device as claimed in claim 10 or 11, **characterized in that** a baffle is placed in the screen.

13. Device as claimed in any of the claims 10-12, **characterized in that** the device comprises pump means for pumping whey or a whey/water mixture out of the screen.
